# EUROPEAN PATENT SPECIFICATION

(11) **EP 2 089 199 B1**
(45) Date of publication and mention of the grant of the patent: **17.08.2011**
(21) Application number: 07824662.6
(22) Date of filing: 21.11.2007
(51) Int. Cl.: B29B 11/14, B29B 11/08, B29C 49/48, B29C 49/06, B65D 25/32, B29C 49/12

(54) **A METHOD AND APPARATUS FOR MAKING A CONTAINER WITH A HANDLE**
VERFAHREN UND VORRICHTUNG ZUR HERSTELLUNG EINES BEHÄLTERS MIT EINEM GRIFF
PROCÉDÉ ET APPAREIL POUR FABRIQUER UN RÉCIPIENT AVEC UNE POIGNÉE

(30) Priority: 22.11.2006 GB 0623325; 27.11.2006 GB 0623651
(43) Date of publication of application: 19.08.2009
(73) Proprietor: The Plastic Can Company Limited, London W2 5AJ (GB)
(72) Inventor: BLAKEBOROUGH, Robert James, Lincolnshire PE9 2FL (GB)
(74) Representative: Train, Matthew
(86) International application number: PCT/GB2007/004450
(87) International publication number: WO 2008/062183

(56) References cited:
- EP-A- 0 978 456
- WO-A-00/67989
- WO-A-99/30894
- JP-A- 11 070 569
- US-A- 4 367 821

## Description

### BACKGROUND OF THE INVENTION

This invention relates to a method of and apparatus for making a container with a carrying handle.

The invention is particularly suitable for the manufacture of wide-mouth containers in the nature of cans or pots, preferably with lids, from polyethylene terephthalate (PET), though it is not limited to such manufacture. The term "wide-mouth" is well understood by the skilled person; in the industry it is understood to relate to a container with a mouth greater than approximately 35mm. "Narrow-mouth" on the other hand is understood to relate to a container with a mouth less than approximately 35mm:

Conventionally, with steel lever-lid paint cans, wire handles are fitted after the cans have been filled with paint and the lid has been applied.

International Patent Application WO97/19801 describes a method of making a container using a two-step process. In the first step an embryo container or preform is formed by injection moulding. At this stage the rim of the container is essentially fully formed, but the body is not yet formed, and instead the embryo container walling takes the form of a central cone extending inwardly from the inner periphery of the rim. In the second step the preform is transferred to a blow mould and the walling is expanded outwardly to form the container body. International Patent Applications WO00/46118 and WO2004/071745 describe containers with more complex rim constructions.

It should be understood that the steps in the container forming process described above might be completed in one all-encompassing machine conventionally referred to within the industry as a one-stage process, or in separate injection moulding and reheat blow moulding machines, in which case it is described as a two-stage process.

Australian Patent Specification AU 2004203640 describes a container with a pivotally-mounted handle extending across a diameter of the top of the container and shafts on the ends of which are received in open keyhole apertures in a flange of the rim. The cross-section of the shafts co-operates with the shape of the apertures to provide a locating action which tends to locate the handle in a horizontal rest position but from which it can easily be pivoted.

US 4367821 discloses a paint pail with depending skirt for label attachment, and methods for making such a pail involving blow moulding a preform made by injection moulding.

WO 00/67989 discloses a plastic bottle designed to receive a handle, and equipment for making the same; the plastic bottle is formed by blow moulding an injection moulded preform.

### SUMMARY OF THE INVENTION

The invention in its various aspects is defined in the appended claims to which reference may now be made. Advantageous features are set forth in the dependent claims.

A preferred embodiment of the invention is described in more detail below with reference to the drawings. This embodiment produces a wide-mouth container which has a body and a rim defining an opening for the container, and is made of a material such as PET, PEN, or PP in a two-stage process. The first step in its manufacture comprises injection moulding a preform which has a rim formed at its mouth and a continuous body-forming portion extending across the preform from the inner periphery of the rim. An injection-moulded handle is then attached to the preform, the handle having ends which are received in apertures in the rim. The preform can then be stored or transported in this condition. In the final step, the preform is first reheated using infrared lamps and then placed in a moulding cavity of a blow moulding apparatus with the preform being located by means of the rim. The mould includes a recess around the rim to accommodate the handle attached to the rim during the operation of the blow moulding apparatus. The body-forming portion expands in the cavity to form the side walls and bottom wall of the container. The side wall of the container contacts a skirt forming the outer part of the rim, thus forming a box section which serves both to retain the handle and to increase the rigidity of this area.

The preferred embodiment includes a feature by which the skirt and the interior surface of the ends of the handle adjacent thereto have cooperating detent arrangements which tend to latch the handle on the container in one or more predetermined pivotal positions, so as to assist pouring from the container. For example, the detent arrangements can comprise an opposed cooperating notch and bead or rib extending radially of the pivot axis. Alternatively they can comprise a polygonal shape formed about at least part of the pivot axis of the handle, a part of which polygonal shape cooperates with an engaging portion on the rim.

In one embodiment the ends of the handle are received in the rim other than at diametrically-opposed locations, for example at locations which are spaced around the rim by 90 to 175 degrees. This can assist in pouring from the container. With a handle of appropriate length this also provides two rest positions for the handle, one lying around the rim and the other lying against the side of the container below the rim.

### BRIEF DESCRIPTION OF THE DRAWINGS

The invention will now be described in more detail, by way of example, with reference to the drawings, in which:
**Figure 1** is a side sectional view through an injection mould illustrating the manufacture of a preform;
**Figure 2** is a side sectional view through an injection moulded preform manufactured in the machine of Figure 1;
**Figure 3** is a sectional view through a blow mould illustrating the beginning of the formation of the container from the preform;
**Figure 4** is a side sectional view through a container following blow moulding;
**Figure 5** is a sectional detail through the rim of the preform of Figure 2;
**Figure 6** is a sectional detail through the rim of the container of Figure 4;
**Figure 7** is a sectional view through the heating station of a reheat blow moulding machine.
**Figure 8** is a plan view of an array of handles moulded as part of the preferred method embodying the invention;
**Figure 9** is a side view of one of the handles showing the two ends;
**Figure 10** shows at (a) and (b) detailed cross-sectional views through part of the handle taken on the line X-X in Figure 9;
**Figure 11** is a perspective view of the finished handle shaped ready to fit to the preform;
**Figure 12** consists of both a side elevation and a plan view of a preform showing the handle-receiving slot; ;
**Figure 13** is a view similar to Figure 1 showing an injection moulding machine adapted for use in the invention with part thereof shown in greater detail;
**Figure 14** is a side sectional view through an injection moulded preform showing the location where the handle is fitted in accordance with the invention;
**Figure 15** is a view similar to Figure 14 showing the handle located on the preform;
**Figure 16** is an upwards perspective view showing the handle located on the preform;
**Figure 17** is an upwards perspective view showing the preform about to be placed in the blow moulding machine;
**Figure 18** is a view similar to Figure 3 showing the preform in the blow moulding machine adapted in accordance with this invention;
**Figure 19** is a sectional view similar to Figures 14 and 15 showing the rim and handle after the blow moulding operation;
**Figure 20** shows two views of the finished container, (a) is a perspective view with the handle in the folded or recessed condition; and (b) is a sectional view through the container with the handle in the carrying position;
**Figure 21** is a sequence of three images illustrating fitting the handle to the preform;
**Figure 22** shows four detail views of a handle latching arrangement which can desirably be used with a can manufactured by a method as illustrated in the preceding figures;
**Figure 23** is a side view of the can of Figure 22 showing the three handle positions;
**Figure 24** shows a variant of the handle latching arrangement of Figure 22;
**Figure 25** illustrates a different detent arrangement for latching the handle; and
**Figure 26** shows a further container with an off-set handle with three side views showing the handle in different positions at (a), (b) and (c), a plan view of the container at (d) and a sectional view of the container in a pouring position at (e).

### DETAILED DESCRIPTION OF THE PREFERRED EMBODIMENTS OF THE INVENTION

### Basic known moulding method

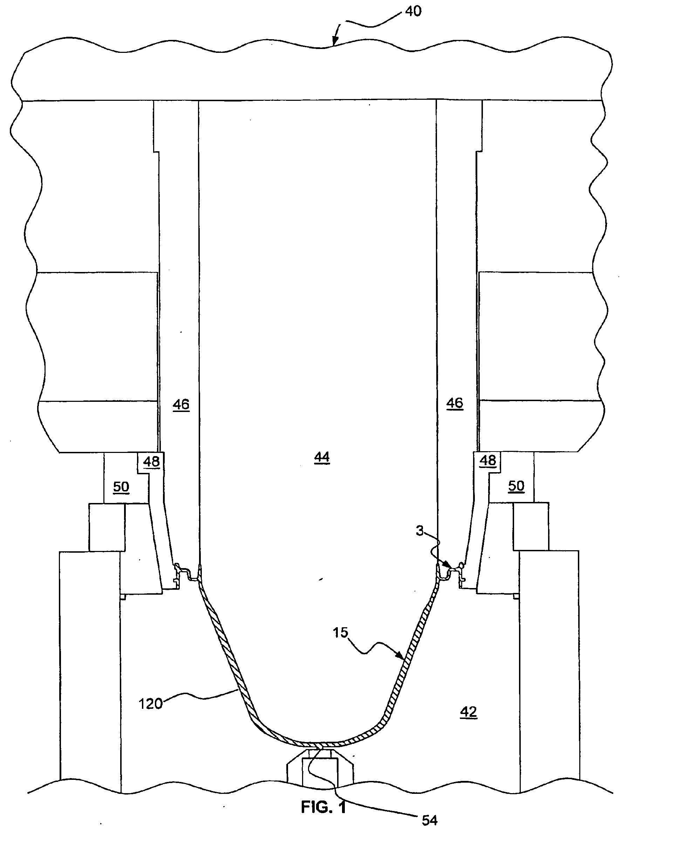

The method of manufacturing the container of Figure 1 will now be described. The manufacturing method is based on that described in International

Patent Application No. WO97/19801 Reference may be made to that application for further details and variations concerning the design. The basic method described in that application will first be explained with reference to Figures 1 to 4 of the drawings.

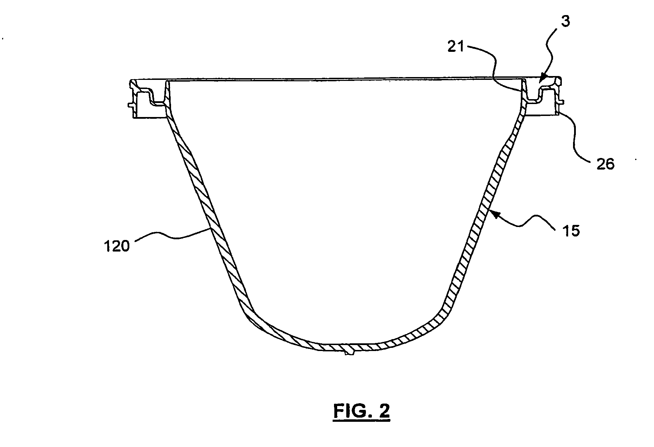

The first stage of the method is to form a preform. The preform 15 is shown in Figure 2 and is formed by injection moulding. Injection moulding apparatus is very well known and thus a detailed description of such apparatus need not be given here. It should be noted however, that the rim of the preform is fully formed in this operation and adopts the shape required in the final container. The use of injection moulding allows the rim and body-forming portion to be formed with high accuracy, which is necessary respectively for good sealing of the lid and for achieving the optimal distribution of material in the finished container.

It should be noted that in this description the preform and eventual container are assumed to be in conventional orientation, that is with the mouth at the top and the base at the bottom. The terms "up", "down", "vertical", "horizontal", "raised" and "lowered" and the like and their derivatives should therefore be construed in this sense although in actual fact the orientation of the preform or container may be different from this.

The container is made of a thermoplastic resin, and in particular is of polyethylene terephthalate (PET), polyethylene naphthalate (PEN), a PET and PEN blend, or polypropylene (PP).

The manufacturing process can proceed using either of two distinct injection stretch blow-moulding techniques, one-stage or two-stage. In the one-stage process, preforms are injection moulded, conditioned to the proper temperature, and blown into containers - all in a continuous process on one machine. In the two-stage process, the preforms are produced on a conventional injection moulding machine and are cooled to room temperature after discharge from the injection mould, and if desired may be stored or shipped to a completely different location for reheating and blowing on a separate reheat blow moulding machine in which infra-red energy is used to re-heat the preforms to the correct temperature for blowing to give the finished container. The present invention is primarily of value with the two-stage process.

A section through a typical injection mould is shown in Figure 1. The injection mould has two main sections, namely a lower section formed by a cavity insert 42 and an upper section formed by a two-part inner preform core pin 44 and an outer preform core pin section 46. Neck splits 48 are also provided, carried by neck split carrier plates 50. Plastics material is injected through an injection orifice 54, colloquially called the "gate", in the cavity insert 42 at the bottom centre of the preform 15.

The preform is designed in such a manner that a straightforward vertical movement of the central mould core (pin 44 and 46) will allow removal of the preform from the mould. There are no undercuts or slides in the construction of either the core or the cavity.

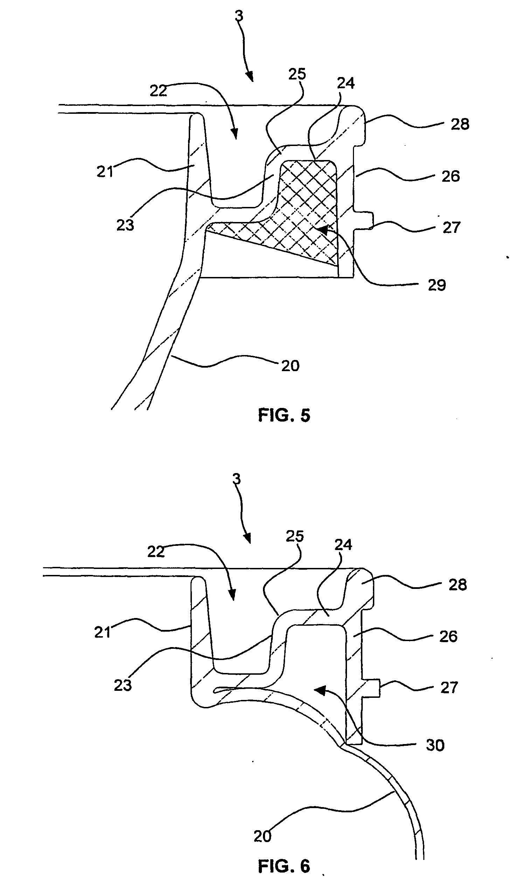

The preform shown in Figure 2 includes a fully formed rim 3. However, the wall 20 of the body of the container is not formed at this time, but instead the preform includes a continuous dished or bowl-shaped body-forming member 120 which extends across the preform from the inner periphery 21 of the rim, but which is of reduced size compared with its final form. The rim is described in more detail below, but it will be noted that it has an outer face or skirt 26 and a U-shaped channel 22, seen in Figure 5.

The shape of the body-forming member 120 can be anything from approaching a flat membrane to a substantially conical shape. The thickness of the body-forming member 120 is important, as it will at least partially determine the thickness of the final sidewalls and bottom wall. Thus, the body-forming member 120 should preferably be of thickness of between 2 and 4 mm. Preferably the region which will form the sidewall should be of substantially uniform thickness, and preferably the body-forming member should be without abrupt changes in thickness.

The shape of the preform enables them to inter-nest or stack with other like preforms, which allows for more efficient storage and transportation. However, the preforms are easy to separate, because individual preforms can be grasped easily.

The preform is then moved into a reheat blow moulding machine. For this the preform needs to be reheated; this is described below. A blow moulding machine is one type of pressure moulding machine; a less preferred alternative would be to employ a machine that uses suction rather than blowing. Blow moulding machines, and methods of blow moulding are well known in the art and are described, for example, in International Patent Applications WO97/1980 WO00/46118 and WO2004/071745.

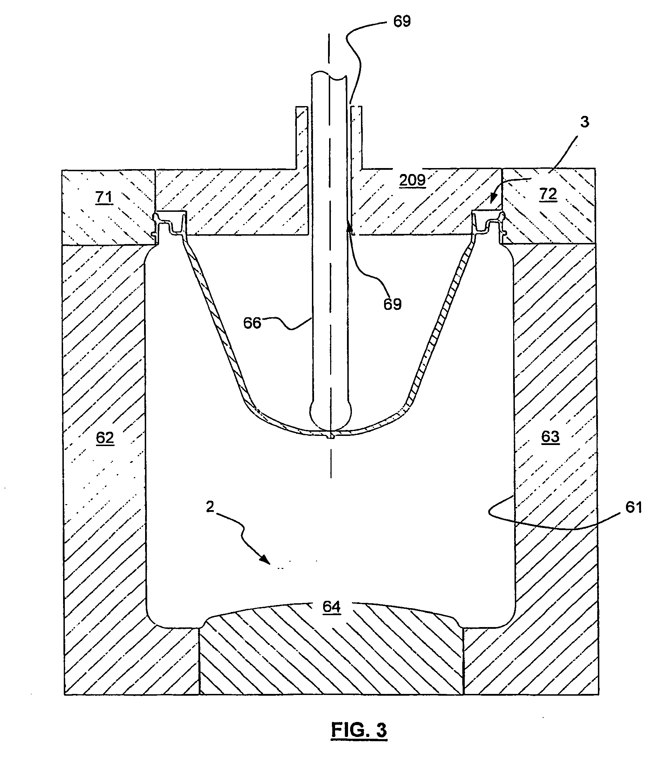

The hot and pliable preform is transferred to the blow moulding station 60, shown in Figure 3. This comprises a cavity 61 defined at the sides by two moveable mould halves 62 and 63 with preform retention and locating pieces 71 and 72 at the top and at the bottom by a moveable base or punt 64, The cavity 61 has a shape which conforms with the shape of the finished container. The top of the cavity is defined by a clamp 209 which has a circular opening through which an axially vertically moveable central stretch rod 66 can be lowered into the open top of the preform 15 such that it engages the body-forming portion 120 of the preform 15. As it descends it causes mechanical downward stretching of the body-forming section. The part of clamp 209 which engages with the preform rim 3 may be flat as shown in this simplified view, or preferably will be profiled to closely match the shape of U-shaped channel 22.

Thus, the sequence is that first the two blow mould halves 62, 63 with preform retention and locating pieces 71 and 72 close around the pliable preform 15 supported by the preform carrier 209. Then the stretch rod 66 is lowered to force the material 120, which is to constitute the container walls, towards the base 64 of the mould cavity 61. Simultaneously, compressed air is introduced through the middle 69 of the preform carrier 209 into the preform. This causes the plastics material at the top of the preform to move outwardly until it contacts the side of the blow mould cavity, contacting the bottom of the skirt 26 as it does so, thus forming a box section in the rim.

As the compressed air continues to blow, an aneurysm forms that rapidly inflates until a proto-container, slightly smaller than the mould cavity, has been formed. At this point, higher pressure compressed air is introduced to form the finished container by compressing the still-soft plastics material of the preform hard against the metal sides of the blow mould. This continues to be assisted by the mechanical stretching caused by the stretch rod 66.

The stretch rod 66 is also used to centre the gate (the central or bottom point) of the preform in the bottom of the container. The amount of mechanical stretching imparted by the stretch rod 66 is actually small compared to the stretching caused by the compressed air.

As noted above, the shape of the mould cavity 61 is such as to impart the desired shape to the container side walls 20 and bottom wall 2.

Once the material has cooled and solidified, the high pressure air is exhausted and the blow mould opens and the container is then lifted out. The metal sides of the blow mould may optionally be chilled to help cooling of the plastics material. The container is lifted out by means of the rim 3.

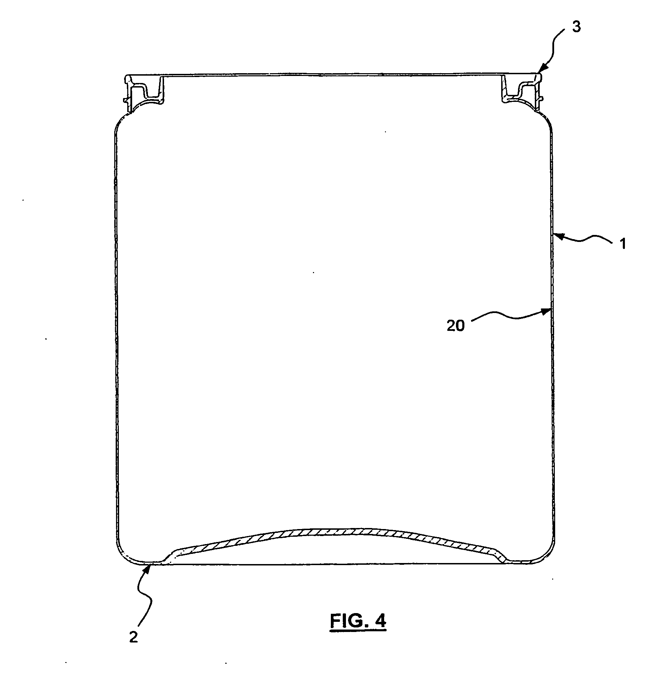

The shape of the resultant container is seen in Figure 4 which is a side sectional view through a finished wide-mouth container 1 manufactured as described above. The container may be of generally cylindrical shape as shown here, or may be square or other shape according to market demand with sides 20 and a base 2. The body is of similar or wider diameter than the mouth, which is defined by the rim 3.

The container rim will now be described in more detail with reference to Figures 5 and 6. Figure 5 is a sectional detail through the rim of the preform 15 of Figure 2, and Figure 6 is a sectional detail through the rim of the finished container 1 of Figure 4. As seen in both figures, in cross section the rim 3 has, from the inside, an upstanding flange 21 defining the inside of the U-shaped channel 22 whose radially outer side 23 is lower than the flange 21. A horizontal flange 24 projects outwardly from the side 23 from the latter's smoothly rounded top 25 and the skirt 26 referred to above depends from its outer edge. At the outer top corner of the flange 24 there is an outset and upstanding further flange 28 whose rounded top is just higher than the top of the flange 21. The flange 21 has a slight inward taper towards the top, and the channel 22 is slightly flared.

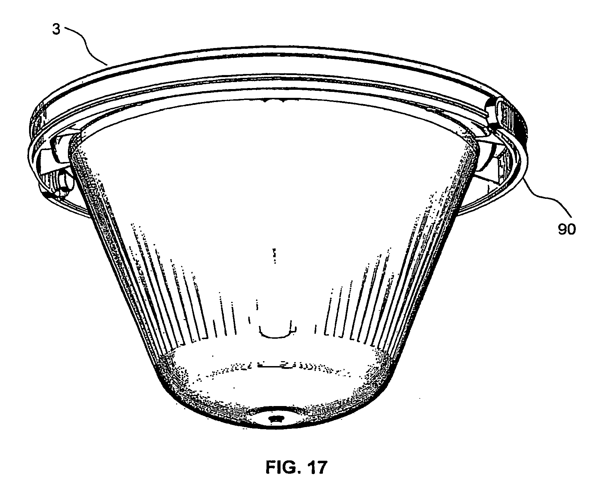

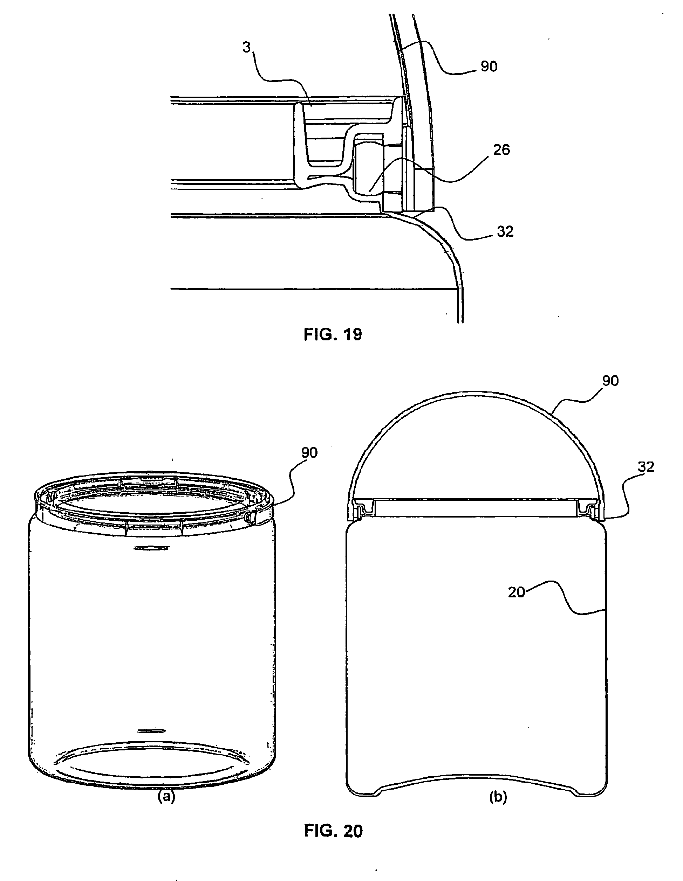

At regular intervals around the rim 3 there are slim ribs 29 in planes radial to the axis of the container. They are shown in Figure 5 only in cross hatching to distinguish them from the rest of the rim with which they are integrally moulded. These ribs enhance the strength of the rim, and typically between eight and twelve ribs 29 (depending upon the diameter of the rim 3) may be included. For clarity the ribs 29 are generally not shown in the other figures (except Figure 17 and Figure 20a) and are not described in further detail.

In the finished container illustrated in Figure 6, the sides 20 of the container which depend from the flange 21 contact the bottom of the skirt 26 to form a box section 30, which provides further strength to the rim.

### Reheating

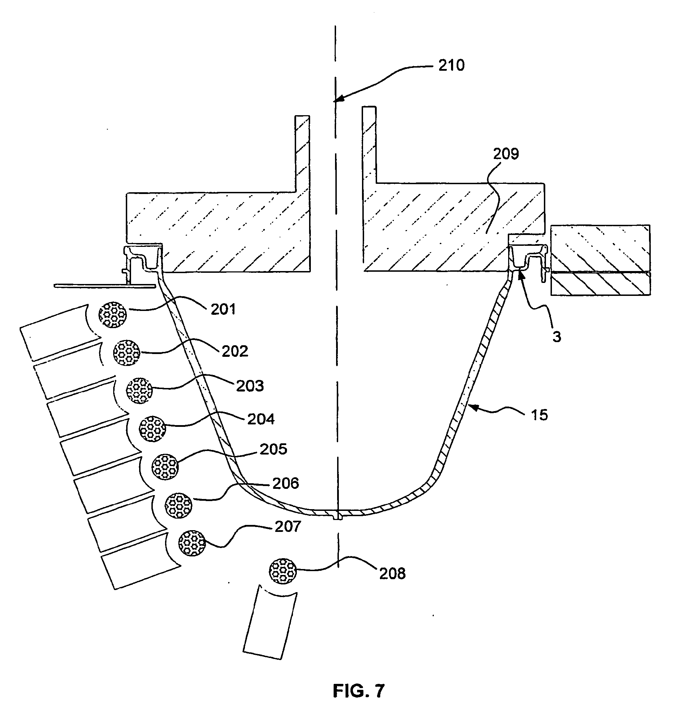

The reheating operation can be achieved as illustrated in Figure 7. Further details of the reheating are given in our International Patent Application WO2008/059256 entitled "Method and Apparatus for Making a Container with a Pressure Accommodating Base". A brief summary of the operation is as follows. When the preforms are to be moulded to form the finished containers, they must first be reheated, as illustrated in Figure 7, so that they have the correct temperature profile. Reheating is achieved using an array of infra-red lamps 201 - 208 that heat the preform 15 in specific places in order to achieve the correct distribution of material in the finished container. The preform 15 is held in front of the infrared lamps by a preform carrier 209 which engages inside the rim 3 of preform 15. The preform carrier 209 revolves around a central axis 210. Thus, the preform rotates about its longitudinal axis, evenly exposing the body-forming portion 120 of the preform to the heaters.

### Making and fifting the container handle in accordance with the invention

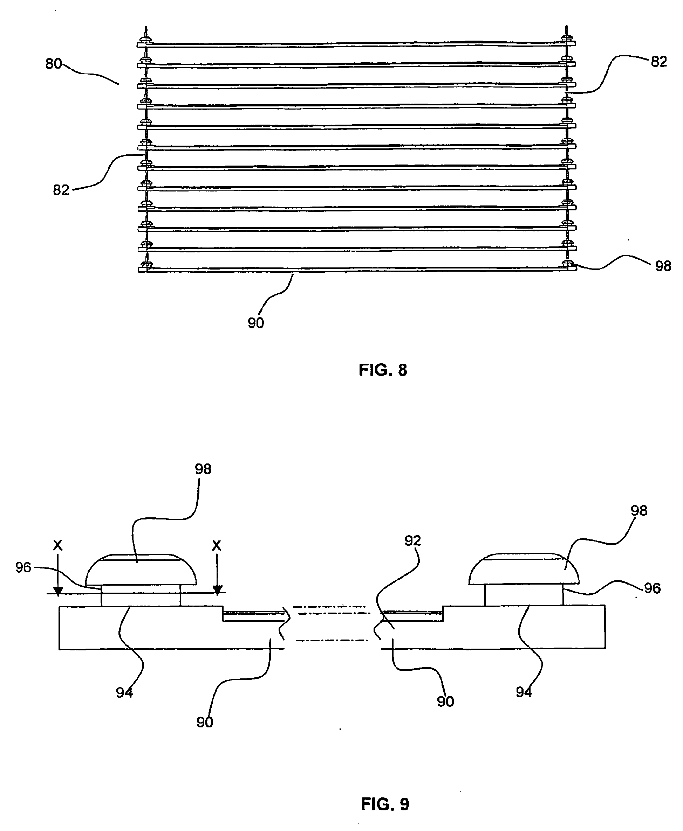

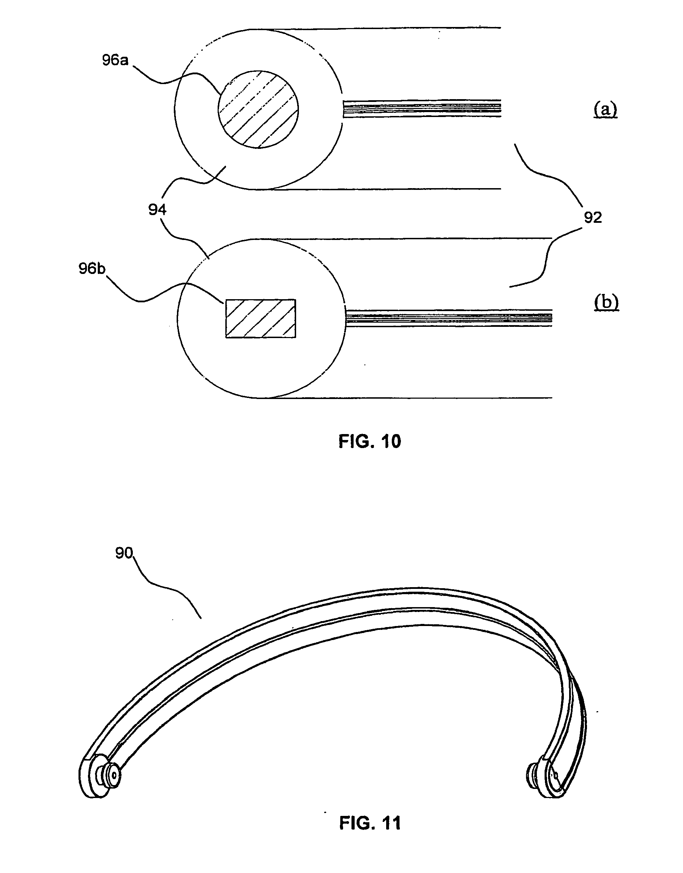

The manufacture of the handles to be fitted to the containers will now be described with reference to Figures 8 to 10. Figure 8 shows a plan view of an array or mat of e.g. twelve handles which are moulded together, and Figure 9 shows a side view of a single handle after they are separated and the sprues have been removed. Figure 10 shows details of the handle as described below. The handle will typically be injection moulded in high density polyethylene (HDPE) or polypropylene (PP).

As seen from Figure 8, an array or mat 80 of e.g. twelve handles 90 can be injection moulded in flat form. The array is formed with sprues 82 at either side which are removed to separate the individual handles 90.

The shape of each handle is apparent from the side view of Figure 9. The handle includes an elongate main bar 92, the central part of which will be held by the user when carrying the container. The bar is formed with an upstanding disc portion 94 which acts as a spacer or washer. Coaxially mounted on the portion 94 is a short spindle 96 which terminates in a second mushroom-shaped portion 98. Thus the spindle 96 is sandwiched between two disc portions of larger diameter than the spindle.

Figure 10 is a sectional view taken on the line X-X of Figure 9 illustrating the cross-section of the spindle 96. The cross-section may be circular as shown by 96a at (a) in Figure 10, or alternatively may be elongate as shown by 96b at (b) in Figure 10. The advantage of the elongate cross-section will become apparent from the description of the method of fitting the handle below.

In order to be fitted to the container, the handle 90 needs to be bent into a semi-circular shape as is shown in Figure 11. The handle material and dimensions are sufficient to allow this to be done while giving the handle sufficient strength to serve its required purpose of carrying the weight of the filled container.

In the system illustrated the handle is fitted to the container before the blow moulding step. That is to say the handle is fitted to the preform 15. It is a feature of the method that the rim of the container is fully formed in the injection moulding step; the subsequent blow moulding serves only to shape the body of the container, not the rim. We have appreciated that with this method it is possible to fit a handle prior to blow moulding and that this has very substantial advantages. How this is done will now be described.

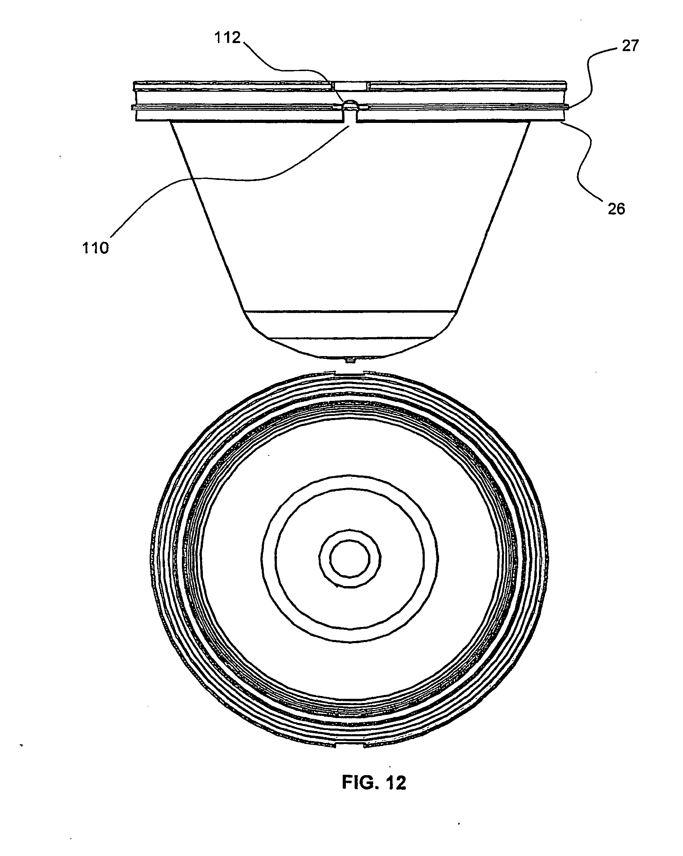

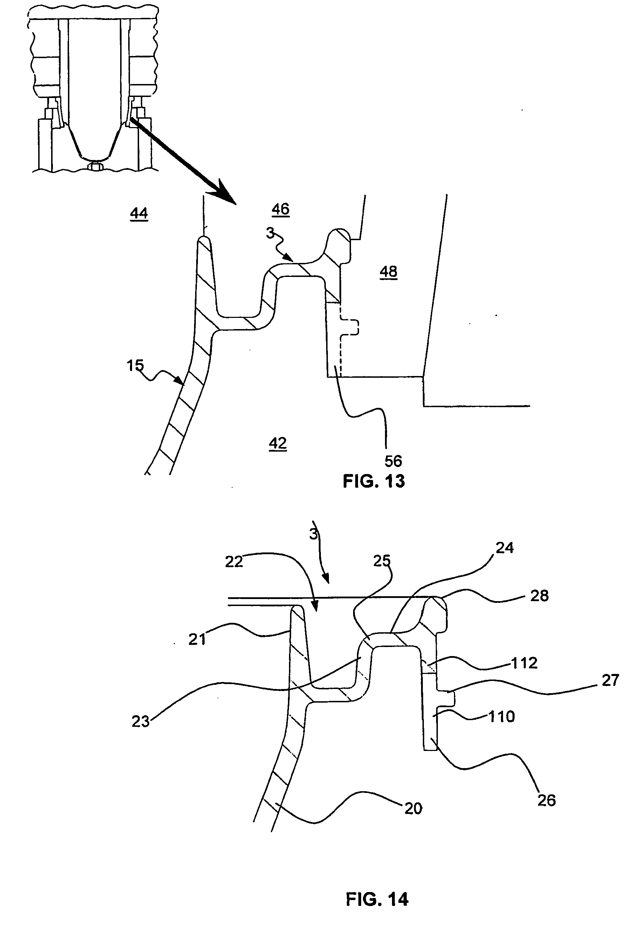

To accommodate the handle 90 the rim 3 is injection moulded with special provision to receive the handle. This is illustrated in Figures 12 to 17. The outer skirt 26 of the rim is formed at two (typically but not essentially) diametrically-opposed positions (Figure 12 - side elevation view) mid-way between adjacent ribs 29 (if present) with two apertures in the form of downwardly-open slots or notches 110. Each slot has a rounded upper end 112 as seen in Figure 12. The slot could be formed by machining the moulded preform. However it is preferably formed in the injection moulding process, and to this end the neck splits 48 of the injection moulder include inwardly directed formations 56 shaped to form the slots 110, as shown in Figure 13 which includes a detail of the relevant region. The slots 110 formed in the preform by the injection moulding can be seen in Figures 12, 13, and 14.

Now the handle 90 can be fitted to the preform 15. This could be done manually, though typically it will be done by machine. The handle is bent to the required shape so that its two ends are adjacent to the respective slots 110, and the spindles 96 of the handle slid upwardly into the slots.

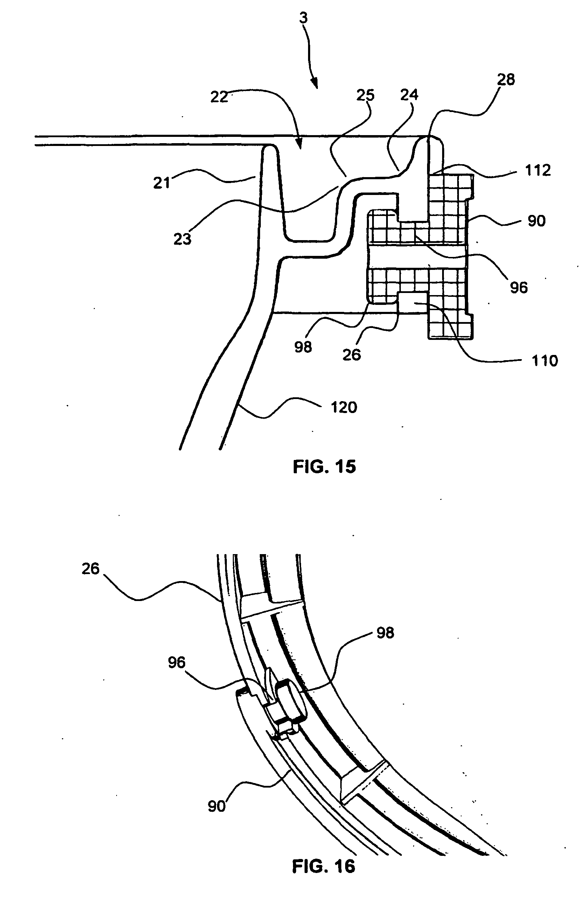

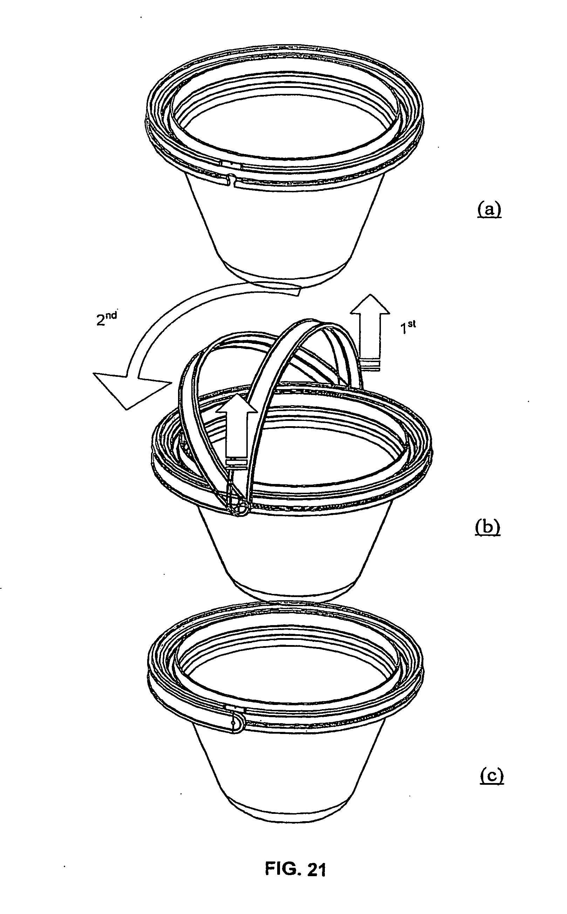

The fitted handle is shown in section in Figure 15 and in perspective view in Figure 16, looking up under the skirt 26. The size of the spindle 96 is chosen relative to the width of the slot. Various possibilities exist here to retain the handle in the preform prior to blowing the container. The slot may be slightly wider at its rounded end 112 with the spindle being a tight fit through the main part of the slot 110 but a looser fit in the rounded end 112 so that it can readily rotate. The slot can have a keyhole shape. If the spindle had the non-round shape of (b) in Figure 10, then the slot preferably has a width intermediate the longer and shorter dimensions of the spindle cross-section, so that the spindle can be slid into the slot in one orientation, with the handle upright in its carrying position, and then rotated 90 degrees to be positively retained in the slot when folded down to the horizontal position as illustrated in the sequence of images of Figure 21. This is the position of the handle shown in Figures 15 and 16 and is the position in which the next operation on the preform 15 takes place. Referring to Figure 21, (a) shows the preform 15 before the handle 90 is fitted. At (b) is shown the two movements required to fit the handle and nest it in position for the blow mould. The first movement, indicated by the upwards arrows one of which is marked 1^{st}, is an upward movement which forces the spindles 96 at the two ends of the handle up into the slots 110 so as to abut the top of the slots. The second movement, indicated by the curved arrow marked 2^{nd}, pivots the handle about the spindles 96 in the slots 110 so that it rests against the skirt 26 of the rim 3. The final position is illustrated at (c) in Figure 21. It is seen that the slots define the pivot axis, which extends across the mouth of the container.

The whole preform is shown in perspective view in Figure 17. In that figure the two opposed ends of the handle can be seen, and the handle is in the horizontal position against the skirt 26 of the rim 3.

In Figure 12 the rim is shown with a small annular outwardly-extending rib 27 around the exterior of the skirt. This not only provides additional strength to the rim, but also provides a clipping point to assist with handle retention prior to blowing the container in the blow mould. The slots 110 are formed through the rib 27. Furthermore flange 28 may be partially cut away as shown in Figure 12 and (in section) in Figure 15 to create a feature that will 'lock' the handle in e.g. the upright position or at a set angle to the vertical to facilitate pouring from the finished container. Alternatively the closed end of slot 110 in the skirt 26 could be e.g. hexagonal instead of round or rectangular in order to provide multiple handle 'rocking' angles when used in combination with a similarly shaped spindle 96.

The preform now moves to the blow moulding stage. The body 120 of the preform 15 is first reheated without the rim and handle being appreciably heated. This can be achieved by radiant heating elements as described above. The preform is placed in the moulding cavity of the blow moulding apparatus with the preform being located by means of the rim.

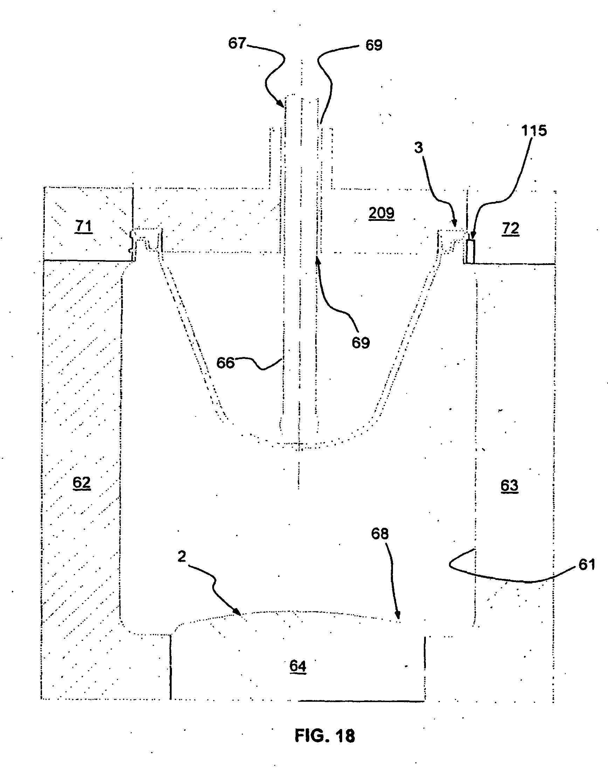

The blow moulding apparatus is shown in Figure 18. It is based on that of Figure 3 and thus is not fully described again. The difference from the machine of Figure 3 is that the preform retention and locating pieces 71 and 72 are recessed over half the periphery of the mould to accommodate the folded handle 90. The recess is referenced 115 in Figure 18 and is seen on the right-hand half of the figure. The left-hand half of the figure shows a part of the periphery where the handle is not located; this is unchanged. In fact in a modification the recessing may be provided over the whole periphery of the mould so that the precise rotational orientation in which the container is inserted into the mould does not matter; the handle can be accommodated whatever position is chosen.

The preform is placed into the moulding cavity of the blow moulding apparatus with the preform being located by means of the rim and the pressure moulding apparatus generally conforming to the outer shape of the rim.

The blow mould is now operated exactly as described above, and the body-forming member or membrane 120 expands to form the body of the container. As seen in Figure 19, the body again expands to contact the skirt 26 of the rim 3 and thus form a box section 30. Not only does this strengthen the rim 3, but it now also ensures that the spindle 96 is captive in the slot 110 and thus that the handle 90 is secured to the container 1 and cannot become detached. In order to accommodate the handle folded against the side of the rim, the body of the container is shaped to have a shoulder 32. That is to say, when viewed from the side, the handle 90 does not protrude or extend outwardly more than the overall width of the main body 20 of the container. The handle is arranged not to stick out in this way because if it did it could cause problems with mechanical handling of the container, being inclined to catch on things.

The finished container is shown in Figure 20 (a) and (b). Figure 20 shows at (a) a perspective view showing the handle 90 folded so as to be a snug fit against the side of the rim 3. In this condition the container can be readily handled by e.g. a filling machine. The material is assumed to be transparent so the ribs 29 can be seen in the figure. The handle is shown in its operative or extended position at (b) in Figure 20 which also shows how the shoulder 32 of the body 20 of the container ensures that the handle falls within the dimension across the container, even when extended.

The container is preferably provided with a lid (not shown) which conforms with the upper surface of the rim 3. The lid sealingly engages the rim of the container, preferably comprising two sealing elements, one on the top and the other at the side of the portion of the lid engaging the rim. A flap may be provided at the side of the lid to assist in its removal. The lid can also be injection moulded and can be based, for example, on the lid described in International Patent Application No. WO00/46118.

It is easier to convey cans without protruding handles since there is nothing to catch on high-speed product handling and conveying equipment. This substantially reduces the likelihood of containers being damaged and having to be discarded. Where paint cans are concerned, this incurs a significant cost for the paint company because not only must the labelled can, lid, and handle be scrapped, it is necessary for the can to be manually emptied and for the paint inside to be safely disposed of. The handles illustrated can safely be conveyed at high speed on automatic machinery.

As described above, by blowing the can with a shoulder 32, a recess can be created into which a handle, typically made of plastics material, may be clipped which does not protrude beyond the maximum diameter of the can if circular. The blown can does not have to be cylindrical, but could be other shapes such as square, in which case the handle does not protrude beyond the dimension across the body of the can, be it breadth, width or even length.

### Handle latching

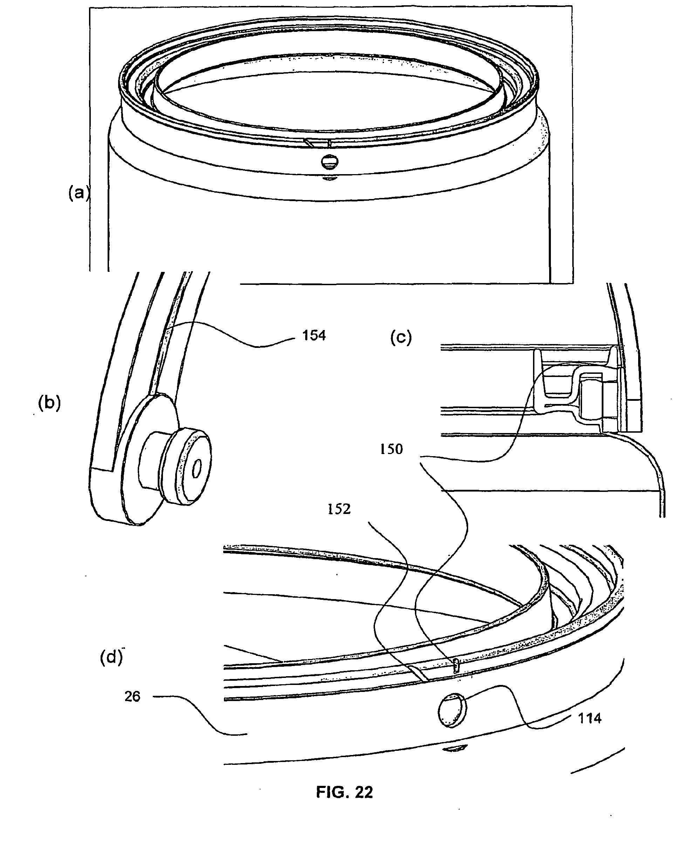

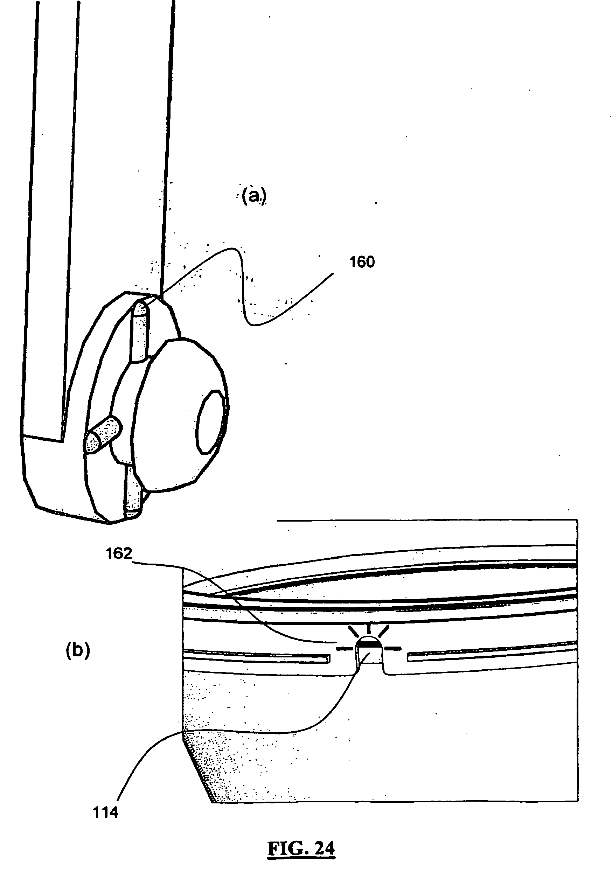

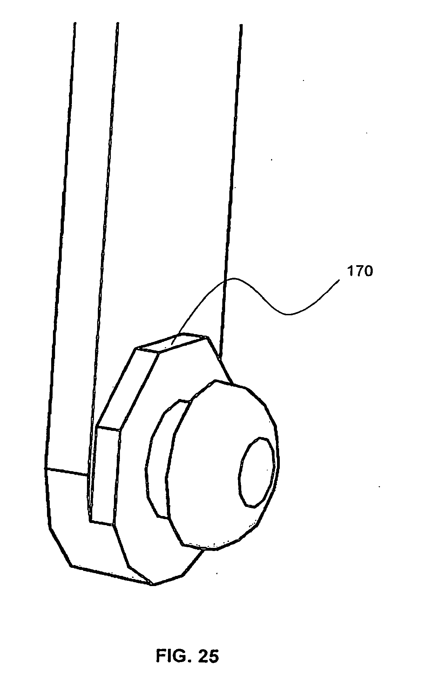

The method described above lends itself to an arrangement in which the handle 90 is latchable in one or more pivotal positions on the container, for example to assist the user in pouring from the container. This will now be illustrated with reference to the remaining Figures 22 to 25, in which Figures 22-23 show a first arrangement, Figure 24 illustrates a second arrangement, and Figure 25 illustrates a third possible arrangement. It should first be noted that the latching arrangement illustrated in these figures is desirably used in conjunction with the method of manufacture described in the preceding figures, but alternatively may be used independently thereof, and the container may be manufactured by a known or conventional process (save for the special features required in order to provide the latching).

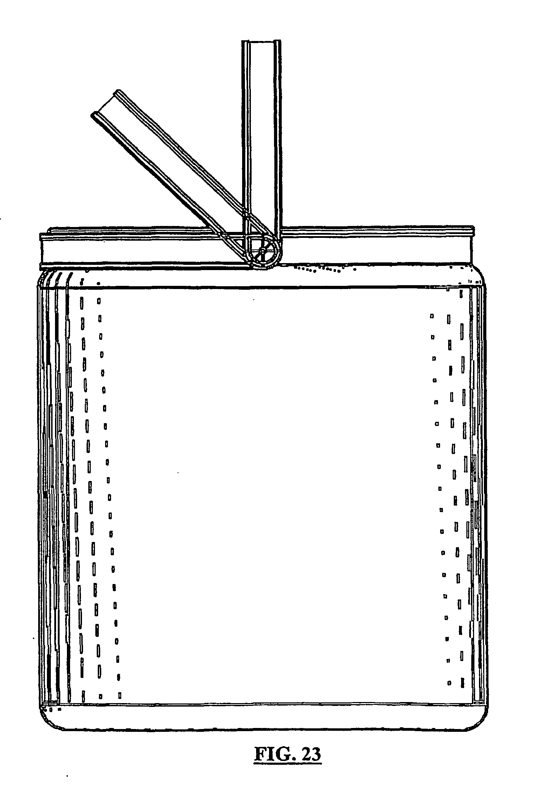

Figure 22 shows four views (a) to (d) of which (a) is a detail of the rim of the can from the side, (b) shows the end of the handle, (c) is a section through the rim and handle end, and (d) is a closer view of the rim showing the detents more clearly. The skirt 26 forms an outer flange portion of the rim which in the region of the handle ends is substantially perpendicular to the pivot axis of the handle. The skirt carries two notches 150 and 152 on its outer face both of which notches are radial to the pivot axis defined (here) by an open keyhole aperture 114 which receives the adjacent end of the handle 90. The interior surface or underside of the handle carries a bead or rib 154 extending along the interior of the handle for a short distance so that it can latch and be received selectively in either of the notches 150 and 152. The first notch 150 is vertical when the can is upright, i.e. perpendicular to the plane of the mouth of the can, which holds the handle in the normal carrying position. The second notch 152 is angled at 45 degrees to this so that the handle can be latched in a convenient pouring position. These two handle positions together with the folded down or nested position can be seen in the side view of Figure 23.

Figure 24 shows a variant in which the bead is replaced by four beads 160 on the disc 94 of the handle. The skirt has corresponding notches 162 shown here arranged 45 degrees apart which allow the handle to adopt a variety of desired positions. Alternatively, the beads and notches can be located within the skirt on the internal face of the skirt and the opposed portion 98 which terminates the spindle 96.

Another possible latching arrangement is shown in Figure 25 where the periphery of the disc 94 takes a part-polygonal shape about the pivot axis and has flats 170. These flats are at 0, 45 and 90 degrees to the vertical and tend to lock the handle at these angles by engaging with the underside of the flange 28 of the rim 3.

In each of these arrangements the detents may be reversed so that the parts shown on the handle are actually on the rim, and *vice versa.*

### Off-set handle

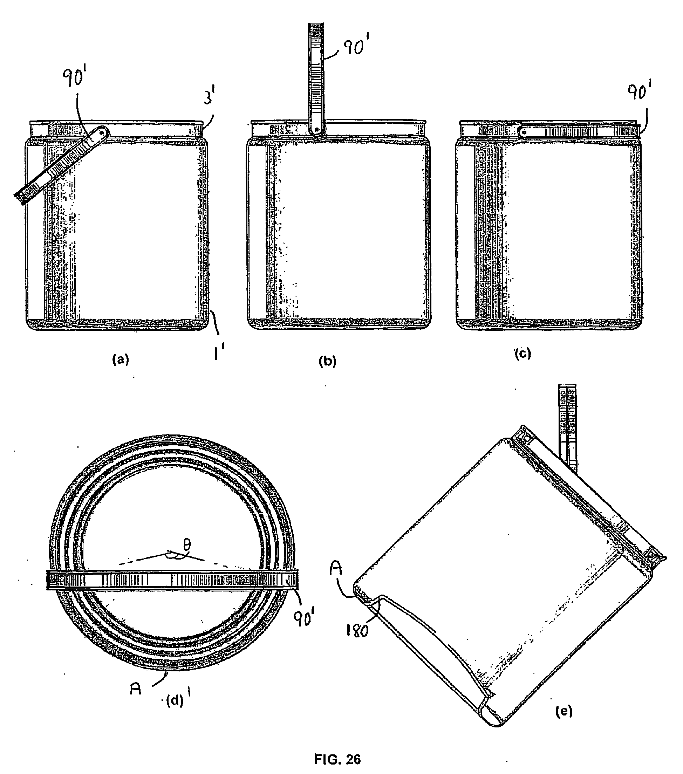

A container 1' is shown in Figure 26 which has an off-set handle 90'. This container is made by a similar method to that described above. However, as shown at (d) in Figure 26, the opposed ends of the handle are not diametrically-opposed, but rather are spaced around the rim of the container 1' by an angle θ less than 180 degrees. In the example shown the angle is in the range 160 to 175 degrees, though other angles less than 175 degrees and preferably more than 90 degrees may be employed. The handle is shown in three positions at (a), (b) and (c) in Figure 26. As seen at (c), the handle is spaced so as to extend around the longer part of the rim, viz. over the angle 360 - θ. When pivoted over to one side the handle fits snugly against the rim, as at (c), whereas when pivoted over the other way as seen at (a) the handle rests against the side of the container below and clear of the rim. The vertically upright position is shown at (b).

A section through the container is shown at (e), from which it is seen that there is a recess 180 in the container bottom. This recess is somewhat larger than that shown in Figure 20 and allows a user to hold the bottom of the container in the region A with one hand while holding the handle 90' with the other, and gives improved control when pouring from the container.

### Further comments

The method described above in relation to a two-stage process could be applied to cans made by a one-stage process. Two-stage production does however have certain advantages. By definition, two-stage production of paint cans means that the injection moulding of the preform, and reheat blow moulding of the can, are entirely separate operations. The injection moulding process is more technically demanding in terms of the size and complexity of the machinery, the scale of the ancillary services required, and the required skill levels of the machine operators, and lends itself more readily to automation, than the reheat blow moulding process. Thus a significant advantage of two-stage can production is that it becomes possible to establish a central dedicated injection moulding facility, with the cans being transported to several blow moulding facilities for final blowing. While being transported they occupy substantially reduced space.

Another advantage is that injection moulding becomes more and more cost effective as the number of cavities increases. However very large injection moulding machines fitted with high cavitation moulds are expensive and can only be justified if they are able to run virtually non-stop; a situation only feasible with a central injection moulding facility supplying a number of satellite blowing operations.

The integral handle is described as being fitted onto the preform before it is blown. This can be done at the central facility, so that it is not necessary to install handle fitting machinery at the satellite blowing operations, thus reducing capital cost and also improving the filling line efficiency. Furthermore the shipping, warehousing, and handling of the handle costs essentially no more than for the preforms alone.

The container is preferably made from polyethylene terephthalate (PET), for which the process is particularly suitable. Other thermoplastic resins may however be used, including polyethylene naphthalate (PEN), also PET and PEN blends and other blow mouldable plastics including polyvinyl chloride (PVC), polycarbonate, and polypropylene (PP). In principle, any material suitable to deformation when heated may be used, but the method is particularly advantageous with PET etc.

PET resins are characterised by their intrinsic viscosity (IV), which is a number related to the molecular chain length (the longer the molecule, the higher the IV and the better the mechanical properties). Resins having intrinsic viscosities in the range of 0.76 - 0.84 have been found to be most preferable for production of containers embodying the present invention.

The containers can be formed as pails, buckets, or cans and are particularly suitable for enclosing solvent-based contents for storage for long period without solvent loss. They may, in particular, be used as cans, especially lever-lid cans, for paint and other coating materials. The container itself is made as a unitary element without the need for welds, which are costly and can be unreliable. The containers can be formed accurately of PET, which requires blow moulding to give the biaxial stretching necessary for optimum strength. A computer running conventional software is normally used to calculate the dimensions of the preform based on the dimensions of the finished bottle, the stretching characteristics of the specific material to be used, and the desired material distribution.

Although preferred embodiments of the invention have been described and illustrated, by way of example, many modifications may be made to the method, apparatus and containers described.

## Claims

1. A method of manufacturing a container (1) with a andler (90) and having a body (2,20) and a rim (3) defining an opening for the container (1) the container (1) being made of a material which is susceptible to deformation when heated, the method comprising the steps of:
providing a preform (15) which has a rim (3) formed at its mouth and a continuous body-forming portion (120) extending across the preform (15) from the inner periphery of the rim (3);
placing the preform (15) in a moulding cavity of a pressure moulding apparatus with the preform (15) being located by means of the rim (3); and
moving the body-forming portion (120) in the pressure moulding apparatus downwardly and outwardly whereby the body-forming portion (120) expands in the cavity to form the container (1) side (20) and bottom walls (2) the body-forming portion (120) contacting the sides of the cavity to form a shape defined by the interior shape of the cavity;
**characterised by** the step of, prior to placing the preform (15) in the moulding cavity of the pressure moulding apparatus, fitting to the rim (3) of the preform (15) a handle (90) having two opposed ends received respectively at different locations around the rim (3), the handle (90) being pivotable on the rim (3)

2. A method according to claim 1, in which the rim has an outwardly-extending portion extending outwardly from the inner periphery of the rim, and a depending skirt at the outer end of the outwardly-extending portion, the handle being received in apertures in the skirt, and in which in the pressure-moulding apparatus the body (120) is expanded into contact with the skirt (26) to form a box section (30).

3. A method according to claim 2, in which the box section (30) contains and retains the handle (90) against removal.

4. A method according to any of claims 1 to 3, further including the step of injection moulding a handle (90) for the container (1).

5. A method according to any preceding claim, in which the preform material comprises polyethylene terephthalate (PET), polyethylene naphthalate (PEN), a PET and PEN blend, or polypropylene (PP).

6. A method according to claim 2, in which the rim has an upstanding inner rib (21) from which the body-forming portion (120) depends, and the outwardly extending portion (22,24) extends outwardly from the upstanding rib (21).

7. A method according to claim 2, in which the skirt (26) is formed with downwardly open slots (110) to receive the ends of the handles (90), and retain the handle (90) on the preform (15) prior to making the container (1).

8. A method according to claim 7, in which the ends of the handle (90) are provided with a narrow portion (96) which fits the slot (110) and a wider portion (94,98) to either side which does not fit the slot (110) whereby the narrow portion (96) can slide into and be retained In the slot.

9. A method according to any preceding claim, in which the ends of the handle (90) are received in the rim (3) at locations which are spaced around the rim (3) by 90 to 175 degrees.

10. A method according to any preceding claim, In which the rim (3) and the ends of the handle (90) adjacent thereto have cooperating detent arrangements (150,152,154) which tend to latch the handle (90) on the container (1) in a plurality of predetermined pivotal positions.

11. An apparatus for manufacturing a container 1 with a handle (90) and having a body (2,20) and a rim (3) defining an opening for the container (1) the container (1) being made of a material which is susceptible to deformation when heated, the apparatus comprising:
a pressure moulding apparatus having a moulding cavity;
means for placing a preform (15) which has a rim formed at its mouth and a continuous body-forming portion (120) extending across the preform (15) from the inner periphery of the rim (3) into the moulding cavity of the pressure moulding apparatus with the preform (15) being located by means of the rim (3) and the pressure moulding apparatus generally conforming to the outer shape of the rim (3); and
means in the pressure moulding apparatus for moving the body-forming portion (120) in the pressure moulding apparatus downwardly and outwardly whereby the body-forming portion (120) expands in the cavity to form the container side (20) and bottom walls (2), the bady-forming portion (120) contacting the sides of the cavity to form a shape defined by the interior shape of the cavity;
**characterised in that** the pressure moulding apparatus includes a recess (115) around the rim (3) to accommodate a handle (90) attached to the rim (3) during operation of the pressure moulding apparatus, the handle (90) having two opposed ends received respectively at different locations around the rim (3) and being pivotable on the rim (3).

12. Apparatus according to claim 11, in which the pressure moulding apparatus includes means (66) for mechanical stretching of the body-forming portion (120).

## Patentansprüche

1. Verfahren zur Herstellung eines Behälters (1) mit einem Griff (90), der einen Körper (2, 20) und einen eine Öffnung für den Behälter definierenden Rand (3) aufweist, wobei der Behälter (1) aus einem Material gefertigt ist, das sich bei Erhitzen verformt, wobei das Verfahren die folgenden Schritte beinhaltet:
Bereitstellen eines Vorformlings (15), der einen an seiner Mündung ausgebildeten Rand (3) und einen kontinuierlichen Körperformabschnitt (120) aufweist, der von der inneren Peripherie des Randes (3) ausgehend über den Vorformling (15) verläuft;
Platzieren des vorformlings (15) in einem Formhohlraum einer Formpressvorrichtung, wobei der Vorformling (15) mittels des Randes (3) positioniert wird; und
Bewegen des Körperformabschnitts (120) in der Formpressvorrichtung nach unten und nach außen, so dass der Körperformabschnitt (120) im Hohlraum expandiert, um den Behälter (1) zu bilden, wobei die Seitenwand (20) und die Bodenwand (2) des Körperformabschnitts (120) die Seiten des Hohlraums berühren, um eine durch die Innenform des Hohlraums definierte Form zu bilden;
**gekennzeichnet durch** den Schritt des Montierens, vor dem Platzieren des Vorformlings (15) im Formhohlraum der Formpressvorrichtung, eines Griffes (20) mit zwei gegenüberliegenden Enden, die jeweils an einer anderen Stelle um den Rand (3) aufgenommen werden, am Rand (3) des Vorformlings (15), wobei der Griff (90) am Rand (3) schwenkbar ist.

2. Verfahren nach Anspruch 1, wobei der Rand einen von der inneren Peripherie des Randes nach außen verlaufenden Abschnitt und eine herabhängende Schürze am äußeren Ende des nach außen verlaufenden Abschnitts aufweist, wobei der Griff in Öffnungen in der Schürze aufgenommen wird und wobei der Körper (120) in der Formpressvorrichtung in Kontakt mit der Schürze (26) expandiert wird, um ein Kastenprofil (30) zu bilden.

3. Verfahren nach Anspruch 2, wobei das Kastenprofil (30) den Griff (90) aufnimmt und gegen Entfernen festhält.

4. Verfahren nach einem der Ansprüche 1 bis 3, das ferner den Schritt des Spritzformens eines Griffs (90) für den Behälter (1) beinhaltet.

5. Verfahren nach einem der vorherigen Ansprüche, wobei das Vorformlingmaterial Polyethylenterephthalat (PET), Polyethylennaphthalat (PEN), eine PET- und PEN-Mischung oder Polypropylen (PP) umfasst.

6. Verfahren nach Anspruch 2, wobei der Rand eine nach oben stehende Innenrippe (21) aufweist, von der der Körperformabschnitt (120) herabhängt, und der nach außer verlaufende Abschnitt (22, 24) von der nach oben stehenden Rippe (21) nach außen verläuft.

7. Verfahren nach Anspruch 2, wobei die Schürze (26) mit nach unten offenen Schlitzen (110) zum Aufnehmen der Enden des Griffs (90) ausgebildet ist und den Griff (90) vor der Herstellung des Behälters (1) am Vorformling (15) festhält.

8. Verfahren nach Anspruch 7, wobei die Enden des Griffs (90) mit einem in den Schlitz (110) passenden schmalen Abschnitt (96) und einem nicht in den Schlitz (110) passenden breiteren Abschnitt (94, 98) auf beiden Seiten versehen sind, so dass der schmälere Abschnitt (96) in den Schlitz gleiten und von diesem festgehalten werden kann.

9. Verfahren nach einem der vorherigen Ansprüche, wobei die Enden des Griffs (90) in dem Rand (3) an Stellen aufgenommen werden können, die um 90 bis 175 Grad um den Rand (3) beabstandet sind.

10. Verfahren nach einem der vorherigen Ansprüche, wobei der Rand (3) und die Enden des Griffs (90) daneben zusammenwirkende Rastanordnungen (150, 152, 154) aufweisen, die dazu neigen, den Griff (90) in mehreren vorbestimmten Sehwenkpositionen am Behälter (1) einzurasten.

11. Vorrichtung zur Herstellung eines Behälters 1 mit einem Griff (90), der einen Körper (2, 20) und einen eine Öffnung für den Behälter definierenden Rand (3) aufweist, wobei der Behälter (1) aus einem Material gefertigt ist, das sich bei Erhitzung verformt, wobei die Vorrichtung Folgendes umfasst:
eine Druckpressvorrichtung mit einem Formhohlraum;
Mittel zum Platzieren eines Vorformlings (15), der einen an seiner Mündung ausgebildeten Rand und einen kontinuierlichen Körperformabschnitt (120) aufweist, der von der inneren Peripherie des Randes (3) über den Vorformling (15) in den Formhohlraum der Druckpressvorrichtung verläuft, wobei der Vorformling (15) mittels des Randes (3) positioniert wird und die Druckpressvorrichtung im Allgemeinen der äußeren Form des Randes (3) entspricht, und
Mittel in der Druckpressvorrichtung zum Bewegen des Körperformabschnitts (120) in der Druckpressvorrichtung nach unten und nach außen, so dass der Körperformabschnitt (120) in dem Hohlraum expandiert, um die Seitenwand (20) und die Bodenwand (2) des Behälters zu bilden, wobei der Körperformabschnitt (120) die Seiten des Hohlraums berührt, um eine durch die Innenform des Hohlraums definierte Form zu bilden;
**dadurch gekennzeichnet, dass** die Druckpressvorrichtung eine Aussparung (115) um den Rand (103) zur Aufnahme eines Griffs (90) aufweist, der während des Betriebs der Druckpressvorrichtung am Rand (3) angebracht wird, wobei der Griff (90) zwei gegenüberliegende Enden aufweist, die jeweils an einer anderen Stelle um den Rand (3) aufgenommen werden und am Rand (3) schwenkbar sind.

12. Vorrichtung nach Anspruch 11, wobei die Druckpressvorrichtung Mittel (66) zum mechanischen Strecken des Körperformabschnitts (120) aufweist.

## Revendications

1. Procédé de fabrication d'un récipient (1) muni d'une anse (90) et ayant un corps (2, 20) et un bord (3) définissant une ouverture pour le récipient (1), le récipient (1) étant fabriqué en un matériau qui est susceptible de se déformer lorsque chauffé, le procédé comprenant les étapes consistant à :
fournir une préforme (15) qui a un bord (3) formé à son ouverture et une portion continue formant corps (120) s'étendant en travers de la préforme (15) depuis la périphérie interne du bord (3);
mettre la préforme (15) dans une cavité de moulage d'un appareil de moulage sous pression avec la préforme (15) étant positionnée au moyen du bord (3); et
déplacer la portion formant corps (120) dans l'appareil de moulage sous pression vers le bas et vers l'extérieur en vertu de quoi la portion formant corps (120) s'élargit dans la cavité pour former le côté (20) du récipient (1) et les parois inférieures (2), la portion formant corps (120) entrant en contact avec les côtés de la cavité pour former une forme définie par la forme intérieure de la cavité;
**caractérisé par** l'étape consistant à, préalablement à la mise de la préforme (15) dans la cavité de moulage de l'appareil de moulage sous pression, poser sur le bord (3) de la préforme (15) une anse (90) ayant deux extrémités opposées reçues respectivement à des emplacements différents autour du bord (3), l'anse (90) pouvant pivoter sur le bord (3).

2. Procédé selon la revendication 1, dans lequel le bord a une portion s'étendant vers extérieur, s'étendant vers l'extérieur de la périphérie interne du bord, et une jupe dépendante à l'extrémité externe de la portion s'étendant vers l'extérieur, l'anse étant reçue dans des ouvertures dans la jupe, et dans lequel dans l'appareil de moulage sous pression le corps (120) est élargi entrant en contact avec la jupe (26) pour former un caisson (30).

3. Procédé selon la revendication 2, dans lequel le caisson (30) contient et retient l'anse (90) contre l'enlèvement.

4. Procédé selon l'une quelconque des revendications 1 à 3, comprenant en outre l'étape consistant à mouler par injection une anse (90) pour le récipient (1).

5. Procédé selon l'une quelconque des revendications précédentes, dans lequel le matériau de la préforme comprend du téréphtalate de polyéthylène (PET), du naphtalate de polyéthylène (PEN), un mélange de PET et de PEN ou du polypropylène (PP).

6. Procédé selon la revendication 2, dans lequel le bord a une nervure interne droite (21) de laquelle la portion formant corps (120) dépend, et une portion s'étendant vers l'extérieur (22, 24), s'étendant vers l'extérieur de la nervure droite (21).

7. Procédé selon la revendication 2, dans lequel la jupe (26) est formée avec des fentes ouvertes vers le bas (110) pour recevoir les extrémités de l'anse (90) et retenir l'anse (90) sur la préforme (15) préalablement à la fabrication du récipient (1).

8. Procédé selon la revendication 7, dans lequel les extrémités de l'anse (90) sont pourvues d'une portion étroite (96) qui s'adapte dans la fente (110) et d'une portion plus large (94, 98) d'un côté et de l'autre qui ne s'adapte pas dans la fente (110) en vertu de quoi la portion étroite (96) peut glisser dans et être retenue dans la fente.

9. Procédé selon l'une quelconque des revendications précédentes, dans lequel les extrémités de l'anse (90) sont reçues dans le bord (3) à des emplacements qui sont espacés autour du bord (3) de 90 à 175 degrés.

10. Procédé selon l'une quelconque des revendications précédentes, dans lequel le bord (3) et les extrémités de l'anse (90) adjacentes à celui-ci, ont des arrangements de maintien concourants (150, 152, 154) qui tendent à verrouiller l'anse (90) sur le récipient (1) dans une pluralité de positions de pivotement prédéterminées.

11. Appareil de fabrication d'un récipient (1) muni d'une anse (90) et ayant un corps (2, 20) et un bord (3) définissant une ouverture pour le récipient (1), le récipient (1) étant fabriqué en un matériau qui est susceptible de se déformer lorsque chauffé, l'appareil comprenant :
un appareil de moulage sous pression ayant une cavité de moulage;
un moyen pour mettre une préforme (15) qui a un bord formé au niveau de son ouverture et une portion continue formant corps (120) s'étendant en travers de la préforme (15) depuis la périphérie interne du bord (3) dans la cavité de moulage de l'appareil de moulage sous pression avec la préforme (15) étant positionnée au moyen du bord (3) et l'appareil de moulage sous pression se conformant généralement à la forme externe du bord (3); et
un moyen dans l'appareil de moulage sous pression pour déplacer la portion formant corps (120) dans l'appareil de moulage sous pression vers le bas et vers l'extérieur en vertu de quoi la portion formant corps (120) s'élargit dans la cavité pour former le côté (20) du récipient et les parois inférieures (2), la portion formant corps (120) entrant en contact avec les côtés de la cavité pour former une forme définie par la forme intérieure de la cavité;
**caractérisé en ce que** l'appareil de moulage sous pression comprend un évidement (115) autour du bord (3) pour recevoir une anse (90) attachée au bord (3) durant le fonctionnement de l'appareil de moulage sous pression, l'anse (90) ayant deux extrémités opposées reçues respectivement à des emplacements différents autour du bord (3) et pouvant pivoter sur le bord (3).

12. Appareil selon la revendication 11, dans lequel l'appareil de moulage sous pression comprend un moyen (66) pour étirer mécaniquement la portion formant corps (120).
